# EUROPEAN PATENT APPLICATION

(11) **EP 2 709 346 A2**
(43) Date of publication of application: **19.03.2014**
(21) Application number: 11795144.2
(22) Date of filing: 03.06.2011
(51) Int. Cl.: H04M 3/51, H04M 3/42

(54) **METHOD, CALL CENTRE AND SYSTEM FOR SEAT TERMINAL TO RECEIVE CALL**

(71) Applicant: Huawei Technologies Co., Ltd., Shenzhen, Guangdong 518129 (CN)
(72) Inventor: HU, Chengtian, Shenzhen Guangdong 518129 (CN)
(74) Representative: Pfenning, Meinig & Partner GbR
(86) International application number: PCT/CN2011/075316
(87) International publication number: WO 2011/157178

(57) **Abstract**

A method for an agent terminal to answer a call includes: sending, by a call center, a request ring notification to all agent terminals whose skills meet a customer requirement and whose states are non-idle (101); ringing all the agent terminals simultaneously according to received invoke request ring interfaces sent by all the agent terminals (102); and connecting, according to an off-hook answer of the one of the agent terminals (103), a call between one of the agent terminals and a customer terminal. In addition, a call center and a system are further provided.

## Description

### TECHNICAL FIELD

The present invention relates to the field of communication networks, and in particular, to a method, a call center, and a system for an agent terminal to answer a call.

### BACKGROUND

With the rapid development of a computer and telephony integration (Computer and Telephone Integration, CTI) technology, customers impose increasingly higher experience requirements on a call center. When a customer makes a call to a customer service manual agent of the call center, if there are idle manual agents, a CTI platform selects an idle manual agent to answer the call. Usually, it is possible that all agents having a skill of processing the call are in a non-idle state, and cannot answer the call of the customer in time and handle a problem of the customer. However although states of the agents having the skill of processing the call are not idle, sometimes the agents are not processing calls. For example, some agents may be learning another skill or regulation, so that states of the agents are presented as learning; or an agent may be lazy and intentionally presented the state of the agent as leaving. The agents in the non-idle state should have been capable of answering the call of the customer, but because the states of the agents are non-idle, the call center cannot distribute the call to one of the agents. As a result, the agent cannot perform processing in time, and the call of the customer cannot be answered in time, which causes a long wait time and poor customer experience for the customer.

### SUMMARY

Embodiments of the present invention provide a method, a call center, and a system for an agent terminal to answer a call, so that an agent whose state is non-idle can answer a call.

A method for an agent terminal to answer a call includes:
sending a request ring notification to all agent terminals whose skills meet a customer requirement and whose states are non-idle;
ringing all the agent terminals simultaneously according to received invoke request ring interfaces sent by all the agent terminals; and
connecting, according to an off-hook answer of the one of the agent terminals, a call between one of the agent terminals and a customer terminal.

A call center includes:
a sending unit, configured to send a request ring notification to all agent terminals whose skills meet a customer requirement and whose states are non-idle;
a ring initiating unit, configured to initiate a ring to all the agent terminals simultaneously according to received invoke request ring interfaces sent by all the agent terminals; and
a connecting unit, configured to connect, according to an off-hook answer of the one of the agent terminals, a call between one of the agent terminals and a customer terminal.

A system for an agent terminal to answer a call includes:
a call center, configured to send a request ring notification to all agent terminals whose skills meet a customer requirement and whose states are non-idle, ring all the agent terminals simultaneously according to received invoke request ring interfaces sent by all the agent terminals, and connect, according to an off-hook answer of the one of the agent terminals, a call between one of the agent terminals and a customer terminal; and
an agent terminal, configured to receive the request ring notification sent by the call center and invoke a request ring interface from the call center.

As seen from the above technical solution, the embodiments of the present invention have the following advantages: After a customer makes a call to the call center, if none of the agents having a skill of processing the call is idle, a request ring notification is sent to all non-idle agents that meet the skill, so that each of the non-idle agents meeting the skill can know that a call is waiting, and then each agent invokes a request ring interface, thereby implementing group ring for all agent terminals meeting conditions. In the solution, group ring can effectively shorten a duration in which a customer call waits to be answered, and fully use the limited call center for an effective call; therefore, group ring sets the customer free from tiresome waiting and effectively improves customer satisfaction. In addition, with the solution, an agent that is originally in a non-idle state can answer the call of the customer, so that agent resources can be fully used.

### BRIEF DESCRIPTION OF DRAWINGS

FIG. 1 is a schematic flowchart of a method for an agent terminal to answer a call according to the present invention;
FIG. 2 is another schematic flowchart of a method for an agent terminal to answer a call according to the present invention;
FIG. 3 is a schematic structural diagram of a call center according to the present invention; and
FIG. 4 is a schematic structural diagram of a system for an agent terminal to answer a call according to the present invention.

### DESCRIPTION OF EMBODIMENTS

Embodiments of the present invention provide a method, a call center, and a system for an agent terminal to answer a call, so that an agent terminal whose state is non-idle can answer a call.

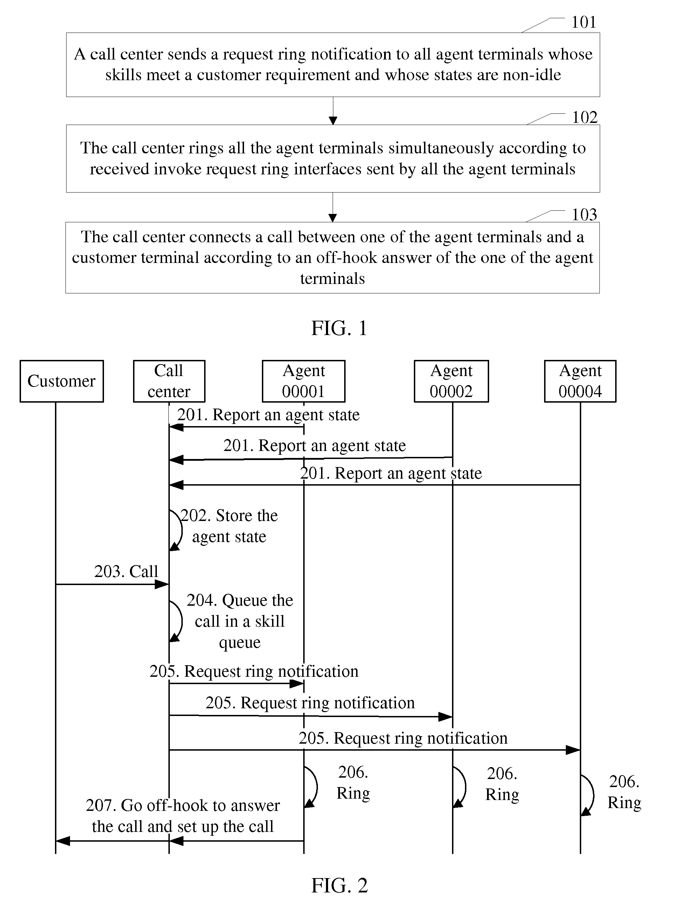

Referring to FIG. 1, an embodiment of a method for an agent terminal to answer a call according to an embodiment of the present invention includes the following:

S101. A call center sends a request ring notification to all agent terminals whose skills meet a customer requirement and whose states are non-idle.

Before the call center sends a request ring notification to all agent terminals whose skills meet a customer requirement and whose states are non-idle, if there is an agent terminal whose skill meets the customer requirement and whose state is idle, the call center routes a customer call to the idle agent terminal.

It should be noted that the request ring notification may carry a call rejection option, so that an agent terminal rejects the call according to the call rejection option.

S102. The call center rings all the agent terminals simultaneously according to received invoke request ring interfaces sent by all the agent terminals.

S103. The call center connects, according to an off-hook answer of the one of the agent terminals, a call between one of the agent terminals and a customer terminal.

In the embodiment of the present invention, after a customer makes a call to the call center, if none of the agents having a skill of processing the call is idle, the call center sends a request ring notification to all non-idle agents that meet the skill, so that each of the non-idle agents meeting the skill can know that a call is waiting, and then each agent invokes a request ring interface, thereby implementing group ring for all agent terminals meeting conditions. In the solution, group ring can effectively shorten a duration of a customer call waiting to be answered, and fully use the limited call center for an effective call; therefore, group ring sets the customer free from tiresome waiting and effectively improves customer satisfaction. In addition, with the solution, an agent that is originally in a non-idle state can answer the call of the customer, so that agent resources can be fully used.

Referring to FIG. 2, another embodiment of a method for an agent terminal to answer a call according to an embodiment of the present invention includes the following:

S201. When a state of an agent changes, an agent terminal reports the current state of the agent to a call center.

The current state of the agent may be an idle state or a non-idle state, where the non-idle state may specifically include: leaving, or learning, or resting. Herein the non-idle state does not mean that the agent is engaged in a call, but means that the agent is not engaged in a call, and it is inconvenient for the agent to answer the call or the agent is unwilling to answer the call because the agent is processing other transactions or is resting. For example, when the agent is waiting for answering a call, it is necessary to report to the call center that the current state is idle; or when the agent is having lunch or is resting, it is necessary to report to the call center that the current state is resting; or when the agent leaves the current seat or does not operate the agent terminal for several minutes, it is necessary to report to the call center that the current state is leaving; or when the agent is learning a skill or discussing a skill with colleagues in the seat, it is necessary to report to the call center that the current state is learning. Herein, the state may be automatically reported by the agent terminal. For example, a predetermined time expires/is reached since the agent leaves the current seat or since the last time the agent terminal was operated the agent terminal automatically reports to the call center that the current state of the agent is busy. Herein the state may also be reported after the agent changes the state of the agent. For example, when the agent is having lunch, or when the agent is learning, the agent actively changes the state of the agent to resting or learning, and the agent terminal reports the changed state to the call center.

S202. The call center receives the state reported by the agent terminal and stores the state of the agent.

The call center stores states and skills of all agents, as shown in Table 1:

**Table 1**

| Agent ID | Agent Skill | Agent State |
|---|---|---|
| 00001 | Data service and broadband service | Resting |
| 00002 | Data service | Leaving |
| 00003 | Voice service and short message service | Idle |
| 00004 | Data service and ring back tone service | Learning |
| ··· | ··· | ··· |

If the agent state reported by the agent terminal changes, or the skill of the agent changes, for example, the agent has a new skill, the call center needs to update information about the agent state and agent skill in the above Table 1.

When the state of each agent changes, it is necessary to perform processing according to steps S201 and S202.

S203. A customer makes a call to the call center.

The customer selects consultation about a skill according to a voice prompt system of the call center. Herein, for example, the customer selects a data service skill.

S204. If an agent having a data service skill is idle at this time, the call center routes the call to the idle agent terminal, the idle agent terminal goes off-hook to answer the call, and it is unnecessary to execute the subsequent process; if none of the agents having a data service skill is idle, the call is queued in a data service skill queue, and the process goes to step S205.

S205. When the call center detects a call being queued in the skill queue, the call center sends a request ring notification to all agents meeting answer conditions.

When the call center detects a call being queued, or the call center periodically queries whether a call is being queued in the skill queue, if a call is being queued in the skill queue, the call center sends a request ring notification to all agents meeting the answer conditions.

Herein the met answer conditions include at least the following two conditions: 1. The agent is in a non-idle state, that is, the agent state may be resting, or leaving, or learning, and so on. 2. The type of the skill of the agent is the same as the type of the skill of the call request.

For example, states of agents 00001, 00002, and 00004 whose skill is a data service are all non-idle states; if a customer initiates a call to request an agent whose request skill is a data service skill at this time, that is, a call is waiting to be answered by an agent in the data service skill queue, the call center sends, when detecting that a call requests an agent whose skill is a data service, a request ring notification to the three agent terminals respectively.

S206. After receiving the request ring notification, the agent terminals invoke a request ring interface of the call center to call the agent terminals, so that group ring is simultaneously implemented for all agent terminals meeting the answer conditions.

After receiving the request ring notification, all the agent terminals can automatically invoke the request ring interface of the call center to call the agent terminals, so that group ring is simultaneously implemented for all terminals meeting the answer conditions.

It should be noted that in another embodiment of the present invention, the request ring notification may further carry a call rejection option menu; when the agent indeed cannot answer the call, the agent may send a reject response to the call center, that is, click the call rejection menu; if the agent does not send a reject response to the call center, it is determined by default that the agent is willing to answer the call. After the agent sends the reject response to the call center, the agent will not be called, that is, will not be ringed or the ring will be stopped.

S207. One of the agents goes off-hook to answer the call and set up a call session with the customer.

For example, if agent terminal 00001 first goes off-hook at this time, agent terminal 00001 answers the customer call and makes a conversation with the customer. In addition, ring of other agent terminals is stopped at this time.

In the embodiment of the present invention, after a customer makes a call to the call center, if none of the agents having a skill of processing the call is idle, the call center sends a request ring notification to all non-idle agents that meet the skill, so that each of the non-idle agents meeting the skill can know that a call is waiting, and then each agent invokes a request ring interface, thereby implementing group ring for all agent terminals meeting conditions. In the solution, group ring can effectively shorten a duration of a customer call waiting to be answered, and fully use the limited call center for an effective call; therefore, group ring sets the customer free from tiresome waiting and effectively improves customer satisfaction. In addition, with the solution, an agent that is originally in a non-idle state can answer the call of the customer, so that agent resources can be fully used.

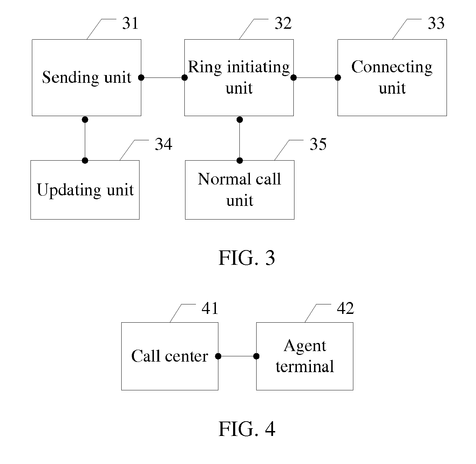

Referring to FIG. 3, a call center in an embodiment of the present invention includes:
a sending unit 31, configured to send a request ring notification to all agent terminals whose skills meet a customer requirement and whose states are non-idle;
a ring initiating unit 32, configured to initiate a ring to all the agent terminals simultaneously according to received invoke request ring interfaces sent by all the agent terminals; and
a connecting unit 33, configured to connect, according to an off-hook answer of the one of the agent terminals, a call between one of the agent terminals and a customer terminal.

Optionally, the call center further includes: an updating unit 34, configured to receive a latest state reported by an agent terminal, and update the state of the agent terminal.

Optionally, the call center further includes: a normal call unit 35, configured to: before the request ring notification is sent to all the agent terminals whose skills meet the customer requirement and whose states are non-idle, if there is an agent terminal whose skill meets the customer requirement and whose state is idle, route the customer call to the idle agent terminal.

Referring to FIG. 4, a system for an agent terminal to answer a call in an embodiment of the present invention includes:
a call center 41, configured to send a request ring notification to all agent terminals whose skills meet a customer requirement and whose states are non-idle, ring all the agent terminals simultaneously according to received invoke request ring interfaces sent by all the agent terminals, and connect, according to an off-hook answer of the one of the agent terminals, a call between one of the agent terminals and a customer terminal; and
an agent terminal 42, configured to receive the request ring notification sent by the call center and invoke a request ring interface from the call center.

Optionally, the request ring notification carries a call rejection option, and the agent terminal is further configured to reject the call according to the call rejection option.

Optionally, the agent terminal is further configured to go off-hook to answer the call, and set up the call with the customer terminal through the call center.

In the embodiment of the present invention, after a customer makes a call to the call center, if none of the agents having a skill of processing the call is idle, the call center sends a request ring notification to all non-idle agents that meet the skill, so that each of the non-idle agents meeting the skill can know that a call is waiting, and then each agent invokes a request ring interface, thereby implementing group ring for all agent terminals meeting conditions. In the solution, group ring can effectively shorten a duration of a customer call waiting to be answered, and fully use the limited call center for an effective call; therefore, group ring sets the customer free from tiresome waiting and effectively improves customer satisfaction. In addition, with the solution, an agent that is originally in a non-idle state can answer the call of the customer, so that agent resources can be fully used.

It may be clearly understood by a person skilled in the art that, for the purpose of convenient and brief description, for a detailed working process of the foregoing system, apparatus, and unit, reference may be made to the corresponding process in the foregoing method embodiments, and the details will not be described herein again.

In the several embodiments provided in the present invention it should be understood that the disclosed apparatus, method, and system may be implemented in other manners. For example, the apparatus embodiment described above is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit are implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disk.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for an agent terminal to answer a call, comprising:
sending a request ring notification to all agent terminals whose skills meet a customer requirement and whose states are non-idle;
ringing all the agent terminals simultaneously according to received invoke request ring interfaces sent by all the agent terminals; and
connecting, according to an off-hook answer of the one of the agent terminals, a call between one of the agent terminals and a customer terminal.

2. The method according to claim 1, further comprising:
receiving a latest state reported by an agent terminal, and updating the state of the agent terminal, wherein
the sending a request ring notification to all agent terminals whose skills meet the customer requirement and whose states are non-idle specifically comprises:
sending a request ring notification to all agent terminals whose skills meet the customer requirement and whose updated states are non-idle.

3. The method according to claim 1 or 2, further comprising: before the sending a request ring notification to all agent terminals whose skills meet the customer requirement and whose states are non-idle, if there is an agent terminal whose skill meets the customer requirement and whose state is idle, routing the customer call to the idle agent terminal.

4. The method according to any one of claims 1 to 3, wherein the request ring notification carries a call rejection option, so that an agent terminal rejects the call according to the call rejection option.

5. A call center, comprising:
a sending unit, configured to send a request ring notification to all agent terminals whose skills meet a customer requirement and whose states are non-idle;
a ring initiating unit, configured to initiate a ring to all the agent terminals simultaneously according to received invoke request ring interfaces sent by all the agent terminals; and
a connecting unit, configured to connect, according to an off-hook answer of the one of the agent terminals, a call between one of the agent terminals and a customer terminal.

6. The call center according to claim 5, further comprising:
an updating unit, configured to receive a latest state reported by an agent terminal, and update the state of the agent terminal.

7. The call center according to claim 5 or 6, further comprising:
a normal call unit, configured to: before the request ring notification is sent to all the agent terminals whose skills meet the customer requirement and whose states are non-idle, if there is an agent terminal whose skill meets the customer requirement and whose state is idle, route the customer call to the idle agent terminal.

8. A system for an agent terminal to answer a call, comprising:
a call center, configured to send a request ring notification to all agent terminals whose skills meet a customer requirement and whose states are non-idle, ring all the agent terminals simultaneously according to received invoke request ring interfaces sent by all the agent terminals, and connect, according to an off-hook answer of the one of the agent terminals, a call between one of the agent terminals and a customer terminal; and
an agent terminal, configured to receive the request ring notification sent by the call center and invoke a request ring interface from the call center.

9. The system for an agent terminal to answer a call according to claim 8, wherein the request ring notification carries a call rejection option, and the agent terminal is further configured to reject the call according to the call rejection option.

10. The system for an agent terminal to answer a call according to claim 8, wherein the agent terminal is further configured to go off-hook to answer the call, and set up the call with the customer terminal through the call center.
